# EUROPEAN PATENT SPECIFICATION

(11) **EP 1 916 680 B1**
(45) Date of publication and mention of the grant of the patent: **29.02.2012**
(21) Application number: 07017558.3
(22) Date of filing: 07.09.2007
(51) Int. Cl.: H01G 4/015, H01G 4/32

(54) **Self-healing capacitor, with corrosion proofing, capacitive element and manufacturing method thereof**
Selbstheilender Kondensator mit Korrosionsschutz, kapazitives Element und Verfahren zu seiner Herstellung
Condensateur auto-régénérateur résistant à la corrosion, élément capacitif et son procédé de fabrication

(30) Priority: 24.10.2006 IT mi20062040
(43) Date of publication of application: 30.04.2008
(73) Proprietor: DUCATI ENERGIA S.p.A., 40132 Bologna (IT)
(72) Inventor: Ardit, Giuseppe, 30123 Venice (IT); Benfenati, Claudio, 40129 Bologna (IT); Bondi, Astorre, 44042 Cento, Ferrara (IT)
(74) Representative: Brunacci, Marco

(56) References cited:
- EP-A- 0 452 165
- EP-A- 0 789 370
- JP-A- 2005 072 294
- US-A- 4 813 116
- US-B1- 6 310 760
- US-B1- 6 370 008

## Description

### BACKGROUND OF THE INVENTION

This invention refers to improvements to self-healing electrical capacitors, for alternating voltages in the region of a few hundred Volts, characterised by a suitable safety and corrosion-proofing system, and to a method for the manufacture of capacitive elements suitable for electrical capacitors of the aforementioned kind.

In particular, the invention is addressed to alternate voltage capacitors of the abovementioned type, suitable for use on electric motors in unsupervised conditions, for example in refrigerators, washing machines or in any other electrical appliance designed for use in an environment where there a serious risk exists that the capacitor could explode or burst into flames.

A usual electric capacitor substantially comprises a capacitive element consisting of at least a first and a second metallized film spirally wound around a central core, and two metal heads made of zinc for connecting the loops of the metallized films to the electrical terminals of the capacitor.

The capacitive element is usually arranged into a suitable insulated casing, secured with resin and closed with a cover for supporting the electrical connectors. Metallized film capacitors are described for example in US-A- 4.482.931.

Capacitors of this type are extremely advantageous, in that they can be manufactured by extremely simple processes, along automatic assembly lines, at comparatively low cost.

However, the possible presence of moisture and air between the loops of the metallized film of the capacitive element can cause a premature corrosion of the metal layers, with the serious risk that the capacitor is liable to suddenly short circuit and explode or burst into flames, jeopardising both the functioning of the apparatus on which it is installed, or worse still, that the fire of the capacitor can expand and spread throughout the surrounding environment.

In order to prevent a problem of this kind, over time, various overpressure-type protection systems have been developed, which exploit the pressure generated by the gas developing inside the capacitor during a short-circuit, to cause a quick breaking of the electric wires between the connectors and the metallized film of the capacitor.

Although protective systems of this kind have contributed towards reducing the risks of the capacitors to explode and bursting into flames, on the contrary they have considerably complicated their structure and relevant manufacturing process, consequently resulting in higher costs. In all the cases where this destructive event occurred, the capacitor broke down completely in a deactivated condition.

At the same time, during its evolution, metallized film technology has led to the creation of metallized films of the type having a variable-thickness resistance and with comb or mosaic segmentations, which are particularly suitable for uses in direct current applications, according to which the metallized layer of the dielectric film has been subdivided into a plurality of metallized segments or areas, joined by bridging elements consisting of fuses capable of interrupting the connection between the metal segments, or areas, upon the occurrence of a short circuit or perforation.

Self-healing segmented-film capacitors are described, for example, in EP 0789370, DE-A-867.888, US-A-3.298.864 and EP 0.789.371.

However, as mentioned in EP 0.789.371, in the event of high voltages the electric discharge upon perforation of the dielectric can be so violent as to affect several adjacent layers of film, leading to a rapid destruction of the capacitor. In any case, in the event of any dielectric perforation, the capacity of the capacitor diminishes progressively, making it impossible to maintain a constant capacity value over time, during the operation of the capacitor.

Moreover, the simultaneous presence of an electric field, moisture and air between the loops of the capacitive element, in particular between the external layers and in correspondence with the metal connecting heads, contributed to increase the lack of constancy of the capacity, over time.

### OBJECTS OF THE INVENTION

The main object of the invention is to provide a capacitor of the wound dielectric film type, whereby it has been possible to obviate or substantially reduce the previously described problems.

In particular, one object of the invention is to provide a capacitor of the aforementioned type, by which it has been possible to considerably reduce the corrosion phenomena of the metallized layers, and the risk of perforation of the dielectric film, thereby ensuring a long useful life of the capacitor, while maintaining its capacity substantially constant over time.

A still further object of the invention is to provide a capacitor comprising a capacitive element capable of achieving the objects previously referred to, while maintaining the capacitive element extremely simple in structure, comparatively limited in cost, and suitable for use on pre-existing assembly lines.

A further object is to provide a method for the manufacture of capacitive elements for self-healing capacitors, with metallized dielectric film, whereby it is possible to eliminate in advance the presence of air and/or moisture in the capacitive element during its construction, before being fitted into a container of a capacitor.

### BRIEF DESCRIPTION OF THE INVENTION

The aforementioned objects can be achieved by means of a capacitor comprising a capacitive element of wound dielectric film type, according to claim 1, and in which the capacitive element is manufactured according to the method of claim 6.

According to a first embodiment of the invention, a self-healing alternate voltage capacitor has been provided, of the type comprising a capacitive element, consisting of at least a first and a second spirally-wound metallized dielectric film, in which metal layers of loops of each dielectric film are connected to a metal head in correspondence with each end of the capacitive element, characterised in that:
the metal layer of at least one dielectric film is divided into segments, or portions, connected by fine metal strips;
the loops of said first and second dielectric film, in correspondence with each end of the capacitive element, have reciprocally staggered edges; and
in that a closed space is provided between each metal head and the staggered edges of the loops of the dielectric films;
each metal head and the aforesaid closed space being impregnated, under vacuum, with a dielectric liquid having a viscosity ranging from 20 to 200 mPa.s.

According to a further feature of the invention, a method for manufacturing capacitive element for self-healing capacitors, has been provided, in which the capacitive element comprises at least a first and a second spirally-wound metallized dielectric film characterised by the steps of:
heating the capacitive element, closed in a vacuum impregnating chamber;
feeding a dielectric liquid into said vacuum impregnating chamber;
causing the metal heads and the closed space between each metal head and the axially staggered edges of the dielectric films to be vacuum impregnated with the dielectric liquid, while maintaining controlled heating and vacuum conditions into the chamber during the impregnation step.

The dielectric liquid may be an oil of vegetable or synthetic type having a low viscosity ranging between 20 and 200 mPa.s, which quickly evaporates at the temperatures at which the heads are soldered to the electrical connectors of the capacitor; preferably, the dielectric liquid is a silicon oil.

### BRIEF DESCRIPTION OF THE DRAWINGS

These and further features of a capacitor comprising a capacitive element according to the invention, and its manufacturing method will be more clearly evident from the following description, with reference to the example of the accompanying drawings, in which:
Figure 1 shows a longitudinal cross-sectional view of a capacitor;
Figure 2 shows a perspective view of the capacitive element, during the winding of the dielectric films;
Figure 3 shows a cross-sectional view of an enlarged detail of the capacitive element of figure 2;
Figure 4 shows a detail similar to that of figure 3, with the metal head;
Figure 5 shows a detail similar to that of figure 4, with the metal head and the closed space between the latter and the staggered loops of the dielectric films, appropriately impregnated with a dielectric fluid;
Figure 6 shows a detail similar to that of figure 5, which shows the soldering of an electric wire for connection to the metal head of the capacitive element;
Figure 7 is a first block diagram showing the impregnation method;
Figure 8 is a second block diagram showing in greater detail the various steps of the impregnation process of the capacitive element.

### DETAILED DESCRIPTION OF THE INVENTION

As mentioned previously, this invention concerns certain improvements to self-healing capacitors, which are particularly suitable for operating with alternate voltages in the range of a few hundred Volts; preferably, the invention is addressed to capacitors of the aforementioned kind, comprising a cylindrical-shaped capacitive element 10, substantially comprising at least a first and a second metallized dielectric film 11, 12, spirally wound around a central core 13 of insulating material.

The capacitive element 10 is provided with metal heads 14 and 15 at the two ends, to connect the metal layers of the loops of each dielectric film to one another, as explained further on.

Each metal head 14, 15 in turn is connected, by an electric wire 16, 17, to an electrical connector 18 and, respectively, 19 of the capacitor, secured to a cover 20. The whole assembly is sealed with a resin in an enclosing casing 21.

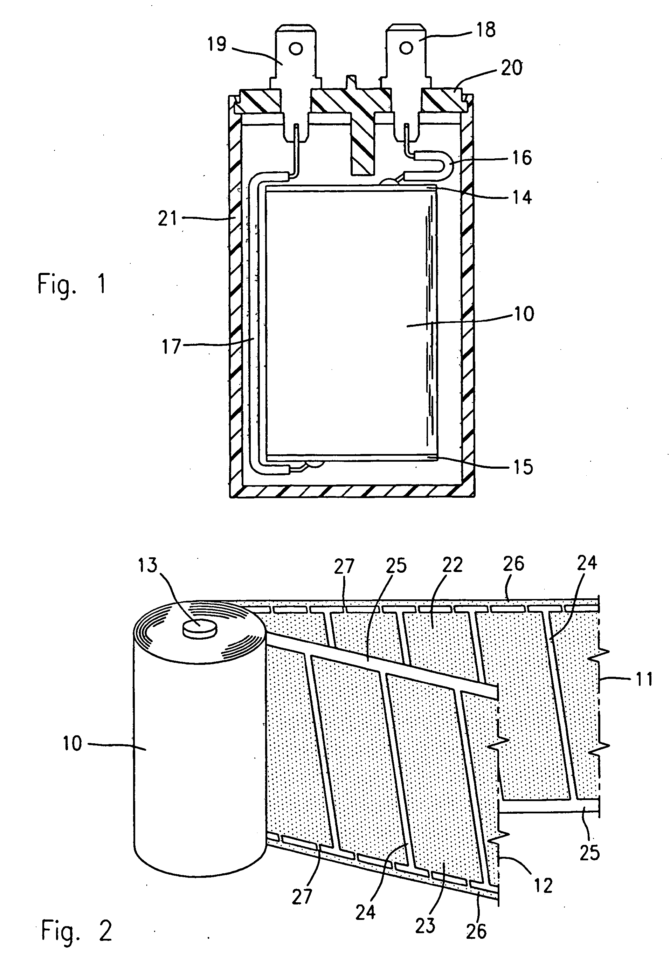

As shown in figure 2, according to one of the possible preferential embodiments, the capacitive element 10 comprises two metallized dielectric films 11, 12 each consisting of a strip of a dielectric material, for example a synthetic material such as polypropylene, or other material suitable for the purpose.

Each dielectric strip 11, 12 on one side surface is provided with a metal layer to form an electrode of the capacitor. The metal layer almost entirely covers the surface of the dielectric strip, leaving certain areas or portions of its surface devoid of metal coating; a segmented conformation of the metal layer of this kind is commonly defined as a "comb" or "mosaic" segmentation, depending upon how the segmentation takes place.

In particular, in the example of figure 2, the metal coating of each dielectric strip 11, 12 is of the comb type in that it comprises a plurality of metal segments 22, 23 separated by strips 24 of non-metallized material, starting from one side edge 25, as shown. The metal segments 22, 23 of each strip are electrically connected to one another and to a metallized strip 26 which runs along a side edge opposite the first, by means of metal bridging portions 27 defining "fuses" capable of melting by the Joule effect and electrically isolating the short circuited metal segment or segments, without jeopardising the operation of the capacitor.

An accurate dimensioning of the fuses is indispensable to ensure the correct functioning of this device for protecting the capacitor.

In the practical use of a safety system of this kind, it has been found that in the case of capacitors for alternate voltage, the mere segmentation of the metallization is insufficient to provide an adequate protection. In fact, during the usual operation of a capacitor, other phenomena may occur due to moisture and the presence of oxygen and the electric field, which are liable to cause a progressive corrosion of the metallized layer in the areas subjected to the greatest stress and/or the possible perforation of the dielectric.

These phenomena develop prevalently in critical points of the capacitive element, such as the outer loops and the areas close to the metal connecting heads; these phenomena which occur inside a capacitor have a negative effect on the capacity of the same capacitor, reducing its useful working life. As an alternative to the solution of figure 2, one of the dielectric films could be provided with a metallization of continuous type.

In order to substantially improve these types of capacitors, the invention is addressed to an appropriate solution of the capacitive element, comprising the use of dielectric films with a segmented metallization, of comb or mosaic type, as previously defined, in combination with the impregnation of the metal heads and of the closed space between the heads themselves and the axially staggered edges of the loops of the dielectric films, with a dielectric fluid having such a low viscosity, and rapid evaporation, as to allow the assemblage of the capacitors along pre-existing assembling lines.

The invention is also characterised by a particular manufacturing method comprising vacuum impregnation by a resin of the capacitive element, before its assemblage into a casing of the capacitor.

It is pointed out that for the purposes of this invention, "low viscosity" of the impregnating dielectric fluid, is understood to mean a viscosity ranging between 20 and 200 mPa.s, and rapid evaporation is understood to mean the capacity of the dielectric fluid to evaporate, within few seconds, at the welding temperatures of the electric wires to the metal heads.

It is also pointed out that the dielectric fluid that can be used for partial impregnation of the capacitive element, can be of any type of vegetable or synthetic nature, provided it is suitable for the purpose, capable of rapidly evaporating at the high soldering temperatures of the electric wires to the metal connecting heads, for example within the space of 1 to 3 seconds, thereby ensuring the firm anchoring and a satisfactory electrical contact of the soldering.

The dielectric fluid, as mentioned previously, can be either of vegetable or synthetic nature. A dielectric fluid of vegetable nature suitable for the purpose can be for example colza oil. Likewise, synthetic dielectric fluids can be synthetic silicone and polyol-polyester oils.

The characteristics of the capacitive element will be described in greater detail hereunder, with reference to the figures from 3 to 7 of the drawings.

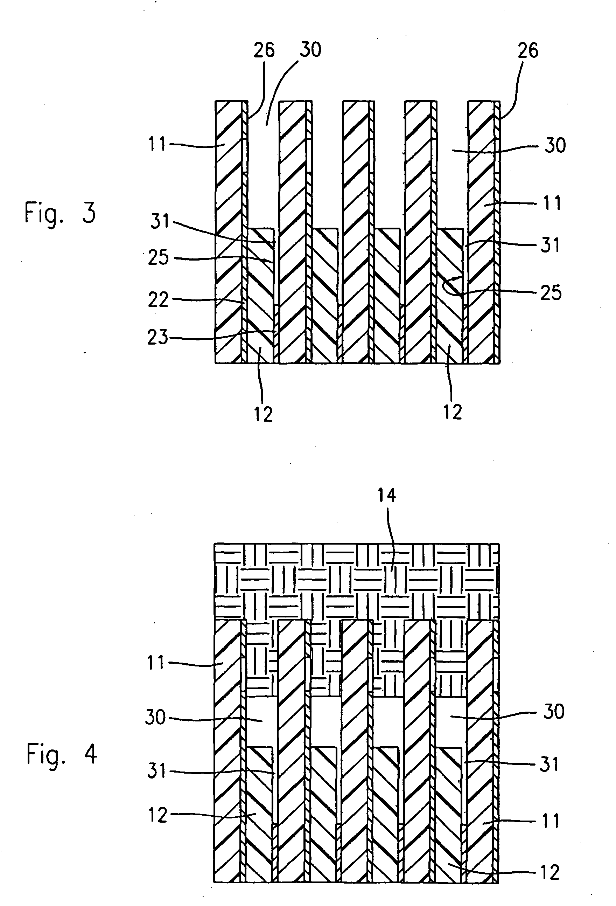

As shown in figure 2 and in the enlarged detail of figure 3, the two dielectric films 11 and 12 are spirally wound, maintaining the side edges axially staggered each others, with the metal layers 22 and 23 disposed between adjacent loops of the two wound-up dielectric films.

Consequently, an empty space is formed between adjacent loops of the dielectric films 11 and 12, at each end of the capacitive element 10, comprising the space 30 existing between subsequent loops of a same dielectric film, the dielectric film 11 in figure 3, and a narrow slit 31 between adjacent loops of the two dielectric films 11 and 12, in correspondence with the non-metallized edge 25.

Figure 4 shows the same detail as figure 3, with the addition of a metal head 14, obtained by spraying molten zinc in a per se known way. Since each metal head extends over the entire surface of both ends of the capacitive element 10, as can be clearly seen in figure 4, between each head 14, 15 and the staggered edges of the loops of the dielectric films a closed space is formed, once again indicated by the reference numbers 30 and 31 in figure 4.

However, the capacitive element 10 thus obtained, would prove to be unsuitable for use in a capacitor, in that the closed space 30, 31 and the space between the wound loops of the dielectric films 11 and 12 retain moisture and air which, due to the reasons previously explained, tend to cause a progressive oxidation and corrosion of the metal layers 22 and 23.

Therefore, according to this invention, a partial impregnation under vacuum is carried out, with a dielectric fluid, both of the metal heads 14 and 15 and of the aforementioned closed spaces 30, 31; this impregnation is obtained after having dried the capacitive element 10, by removing under vacuum the moisture and air existing in the capacitive element itself, in that the metal heads 14, 15 have a certain microporosity degree which makes them permeable to air and to liquids, if maintained for a certain length of time immersed into a dielectric fluid, under vacuum conditions.

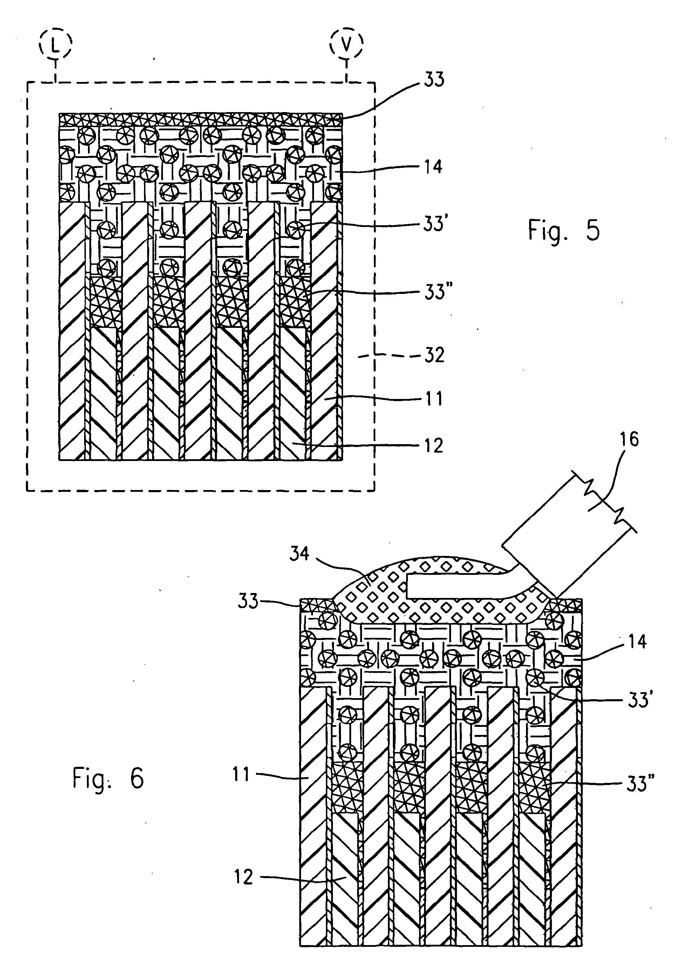

Therefore, as schematically shown in figure 5, a capacitive element 10 provided with the metal heads 14, 15, or several capacitive elements 10 are introduced into a heating and vacuum impregnating chamber 32, which can be connected both to a vacuum source V, such as a vacuum pump, and to a source L of a dielectric fluid of the previously mentioned type. The method for vacuum drying and impregnating the capacitive element 10 will be explained further on with reference to the remaining figures from 7 to 10.

Electric wires can subsequently be soldered onto the heads 14, 15 of the capacitive element 10, suitably pre-impregnated with dielectric fluid, before fitting the capacitive element 10 into the enclosing casing 21 of the capacitor, with wholly conventional pre-existing systems, corresponding to the usual technologies for assembling dry capacitors.

Unlike the conventional impregnating system, which simply consists in submerging the capacitive element in a dielectric fluid after soldering the wires 16, 17, according to this invention the soldering of the wires 16, 17 can be carried out in a wholly conventional way on a usual assembling line, after vacuum impregnation of the capacitive element 10 with the dielectric fluid.

In fact, after repeated tests it has been discovered that the use of low-viscosity dielectric fluids, as previously defined, and the prior impregnation under vacuum, tend to leave on the external surface of the heads 14 and 15 just a fine layer 33 of dielectric fluid, which at the high soldering temperatures, ranging from 350 to 450°C, tends to rapidly evaporate in the soldering area 34, as is clearly shown in the detail of figure 6; from the same figure 6 it can be seen that the dielectric fluid has totally impregnated the head 14 and the empty spaces 30, 31, as indicated by reference numbers 33' and 33".

All this makes it possible to benefit by the pre-impregnation under vacuum of the capacitive element, and to simplify the assembling process of capacitors, resulting in improved performances and comparatively lower costs than capacitors provided with overpressure protection systems.

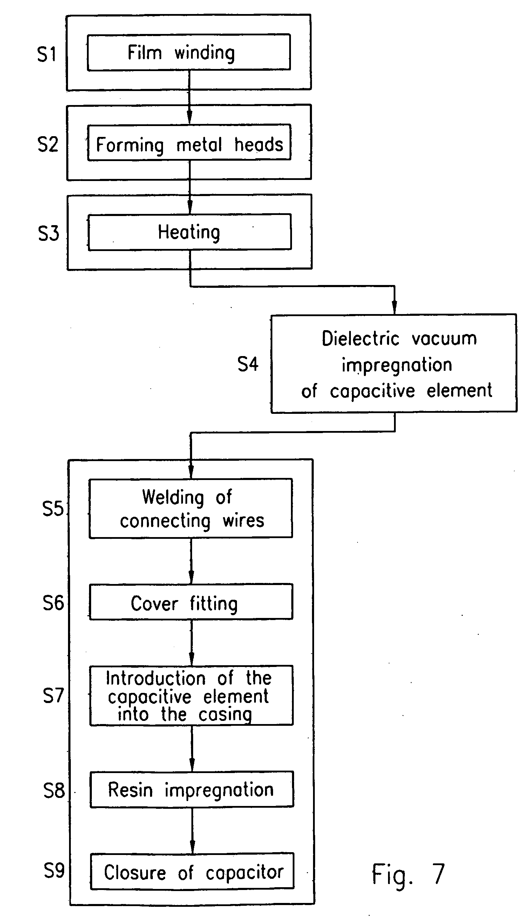

Figure 7 shows a simplified block diagram of the entire process for manufacturing the capacitors, comprising the under-vacuum impregnation method of the capacitive elements 10 according to the invention, which will be illustrated in greater detail with reference to the subsequent figures from 8 to 10.

The manufacturing process of the capacitors according to this invention consists in a first preparing step of the capacitive elements 10, comprising a winding step S1 of the dielectric films 11, 12 as mentioned previously, a second step S2 for forming the metal heads, and a third heating step S3 for the consolidation of the loops of the wound-up dielectric films, in a per se known way.

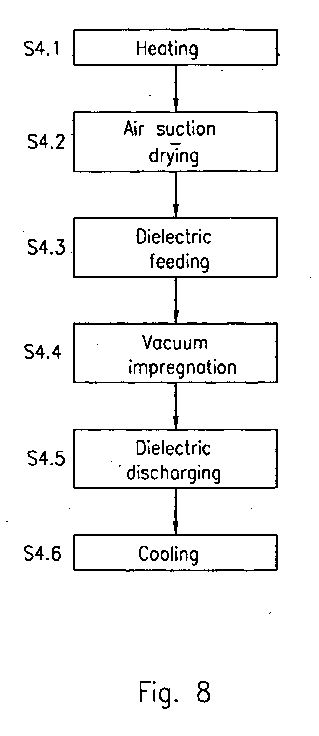

The preparation stage of the capacitive element 10, is followed by the under-vacuum impregnation step with a dielectric fluid, indicated as a whole by reference S4 and described in greater detail in the subsequent figures 8, 9 and 10.

Upon completion of the vacuum impregnation of the capacitive elements, there then follows the final assembling step of the capacitors, on usual processing line similar to the one used for dry capacitors, while maintaining all the advantages of this typical technology; in particular, it comprises a welding step S5 for connecting the wires 16, 17 to the metal heads 14, 15 of the capacitive elements 10; the step S6 for fitting the covers 20, the subsequent step S7 for introducing the capacitive element 10 into the casing 21, the step S8 for applying or filling with a resin the space existing between the capacitive element 10 and the casing 21, and the step S9 for closing the capacitors before their final testing.

With reference to figure 8, a more detailed description will now be given of the vacuum impregnation method of the capacitive elements 10, according to this invention.

A plurality of capacitive elements 10, previously prepared with their metal heads 14, 15 according to the example of figure 4, are loaded into a perforated basket and introduced into the impregnation chamber 32, consisting for example of an autoclave, as shown in figure 5.

The introduction into the autoclave is followed by a heating step S4.1 to bring the capacitive elements 10 to a sufficient temperature to cause their drying.

Simultaneously to the initial heating step S4.1, a certain degree of vacuum is created into the impregnation chamber 32, to cause suction of the air trapped between the loops of the wound up films, step S4.2.

After having reached the maximum heating temperature and the required vacuum degree, the two parameters are maintained at substantially constant values for a sufficient period of time to cause the drying and vacuum de-aeration of the capacitive elements 10.

Upon completion of the drying step S4.2, the dielectric fluid is fed into the impregnation chamber 32, step S3.

The dielectric fluid must be fed under vacuum conditions, into the chamber 32 to such a level as to completely submerge all the capacitive elements 10; the conditions of temperature T and of vacuum P during the impregnation step S4.4 must in any case be such as to ensure the total impregnation of the metal heads 14, 15 and of the closed space 30, 31 existing between the heads themselves and the staggered edges of the two dielectric films 11, 12, as shown in the detail of figure 5.

Upon completion of the impregnation step S4.4, the vacuum will be gradually reduced and discharged step S4.5, leaving the capacitive elements 10 to cool down, step S4.6.

The capacitive elements 10, with the heads completely impregnated with dielectric fluid can now be removed from the impregnation chamber 32, and sent on to a subsequent assembling of the capacitors, according to the steps from S5 to S8, along a pre-existing automatic assembling line.

From what has been described and shown in the accompanying drawings, it will be clear that by means of the capacitive elements and the method of impregnation under vacuum according to the invention, the following advantages are achieved:
a) safeguarding of the critical points of the dielectric films, in correspondence with the external loops and in the vicinity of the metal electrical connecting heads;
b) improved efficacy of the characteristics of the segmented films, with regard to the safety of the capacitors, and with regard to the possibility of maintaining their capacity over time;
c) elimination of the conventional overpressure safety devices, with a consequent simplification of the capacitor itself and its manufacturing process; lastly;
d) the possibility of using casings of plastic material, in place of those made of aluminium, which are necessary with overpressure protection systems, since the metal casings require a further internal insulation.

Without detriment to the general characteristics of the capacitive elements and of the impregnation method, other modifications and/or variations may be made to the capacitive elements themselves and/or to the method of impregnation described, without thereby departing from the accompanying claims.

## Claims

1. A self-healing capacitor, for alternate voltages, of the type comprising a capacitive element (10) consisting of at least a first and a second spirally-wound metallized dielectric films (11, 12), in which the metal layers of the loops of each dielectric film (11, 12) are connected to a metal head (14) in correspondence with each end of the capacitive element (10), **characterised in that**:
the metal layer of at least one dielectric film (11, 12) is divided into metal segments or portions (22, 23) connected by fine strips (27) of metallization;
the loops of said first and second dielectric films (11, 12), in correspondence with each end of the capacitive element (10), have axially staggered edges; and
**in that** a closed space (30, 31) is provided between each metal head (14) and the staggered edges of the dielectric films (11, 12);
each metal head (14) and the aforesaid closed space (30, 31) being impregnated, under vacuum, with a dielectric fluid having a viscosity ranging between 20 and 200 mPa.s.

2. The capacitor according to claim 1, **characterised in that** the dielectric fluid for impregnating the capacitive element (10) is of synthetic nature.

3. The capacitor according to claim 2, **characterised in that** the synthetic dielectric fluid is selected from silicone or polyol-polyester oil.

4. The capacitor according to claim 1, **characterised in that** the dielectric fluid for impregnating the capacitive element (10) is of vegetable nature.

5. The capacitor according to claim 4, **characterised in that** the dielectric fluid is colza oil.

6. A method for manufacturing a capacitive element (10) for self-healing capacitors, in which the capacitive element comprises at least a first and a second spirally-wound metallized dielectric films (11, 12) and metal heads (14) **characterised by** the steps of:
heating the capacitive element (10), closed in an impregnation chamber (32) under a vacuum condition;
feeding a dielectric liquid into said impregnation chamber (32);
causing the metal heads (14) and a closed space (30, 31) between each metal head (14) and axially staggered edges of the loops of the dielectric films (11, 12) to be impregnated with a dielectric fluid, while maintaining controlled heating and vacuum conditions into the chamber (32) during the impregnation step;
the dielectric fluid having a viscosity ranging between 20 and 200 mPa.s.

7. The method according to claim 6, **characterised in that** the dielectric fluid is of synthetic nature, selected from silicone and polyol-polyester oil.

8. The method according to claim 6, **characterised in that** the dielectric fluid is colza oil.

9. The method according to claim 6, **characterised by** vacuum impregnating the capacitive element (10) by total immersion in the dielectric fluid.

10. The method according to claim 6, **characterised by** de-aerating the capacitive element (10) at a constant heating temperature and under vacuum conditions, before feeding the dielectric fluid into the impregnation chamber (32), and subsequently maintaining the heating of the capacitive element (10) under the vacuum conditions.

11. A capacitive element (10) manufactured according to the method claimed in any one of the claims from 6 to 10, for alternate voltage self-healing capacitors comprising:
at least a first and a second metallized dielectric films (11, 12), at least one of which has a segmented metallization (22, 23), said dielectric films (11, 12) being spirally wound with axially staggered edges;
a metal head (14) for the electrical connection to the metal layers at each end of the capacitive element (10);
and each metal head (14) and a closed space (30, 31) existing between the same metal head (14) and the staggered edges of the dielectric films (11, 12) being impregnated under heated and vacuum conditions with a dielectric fluid.

## Patentansprüche

1. Selbstheilender Kondensator für Wechselspannungen des Typs, der ein kapazitives Element (10) umfasst, das zumindest aus einem ersten und einem zweiten spiralförmig gewickelten, metallisierten dielektrischen Film (11, 12) besteht und in dem die Metallschichten der Schleifen jedes dielektrischen Films (11, 12) an jedem Ende des kapazitiven Elements (10) mit einem Metallkopf (14) entsprechend verbunden sind, **dadurch gekennzeichnet, dass**:
die Metallschicht wenigstens eines dielektrischen Films (11, 12) in Metallsegmente oder -abschnitte (22, 23) unterteilt ist, die durch dünne Metallisierungsstreifen (27) verbunden sind;
die Schleifen des ersten und des zweiten dielektrischen Films (11, 12) an jedem Ende des kapazitiven Elements (10) entsprechende axial versetzte Kanten besitzen; und
dass zwischen jedem Metallkopf (14) und den versetzten Kanten der dielektrischen Filme (11, 12) ein geschlossener Raum (30, 31) vorgesehen ist;
wobei jeder Metallkopf (14) und der oben genannte geschlossene Raum (30, 31) unter Vakuum mit einem dielektrischen Fluid mit einer Viskosität im Bereich von 20 bis 200 mPa · s imprägniert sind.

2. Kondensator nach Anspruch 1, **dadurch gekennzeichnet, dass** das dielektrische Fluid für die Imprägnierung des kapazitiven Elements (10) synthetischer Natur ist.

3. Kondensator nach Anspruch 2, **dadurch gekennzeichnet, dass** das synthetische dielektrische Fluid aus Silikon- oder Polyol-Polyester-Öl gewählt ist.

4. Kondensator nach Anspruch 1, **dadurch gekennzeichnet, dass** das dielektrische Fluid für die Imprägnierung des kapazitiven Elements (10) pflanzlicher Natur ist.

5. Kondensator nach Anspruch 4, **dadurch gekennzeichnet, dass** das dielektrische Fluid Rapsöl ist.

6. Verfahren für die Herstellung eines kapazitiven Elements (10) für selbstheilende Kondensatoren, wobei das kapazitive Element wenigstens einen ersten und einen zweiten spiralförmig gewundenen metallisierten dielektrischen Film (11, 12) und Metallköpfe (14) umfasst, **gekennzeichnet durch** die folgenden Schritte:
Erhitzen des kapazitiven Elements (10), das in eine Imprägnierungskammer (32) unter Vakuumbedingungen eingeschlossen ist;
zuführen einer dielektrischen Flüssigkeit in die Imprägnierungskammer (32);
Veranlassen, dass die Metallköpfe (14) und ein geschlossener Raum (30, 31) zwischen jedem Metallkopf (14) und axial versetzten Kanten der Schleifen der dielektrischen Filme (11, 12) mit einem dielektrischen Fluid imprägniert werden, wobei während des Imprägnierungsschrittes kontrollierte Heiz- und Vakuumbedingungen in der Kammer (32) aufrecht erhalten werden;
wobei das dielektrische Fluid eine Viskosität im Bereich von 20 bis 200 mPa · s besitzt.

7. Verfahren nach Anspruch 6, **dadurch gekennzeichnet, dass** das dielektrische Fluid synthetischer Natur ist und aus Silikon und Polyol-Polyester-Öl gewählt ist.

8. Verfahren nach Anspruch 6, **dadurch gekennzeichnet, dass** das dielektrische Fluid Rapsöl ist.

9. Verfahren nach Anspruch 6, **gekennzeichnet durch** Vakuumimprägnierung des kapazitiven Elements (10) **durch** vollständiges Eintauchen in das dielektrische Fluid.

10. Verfahren nach Anspruch 6, **gekennzeichnet durch** Entlüften des kapazitiven Elements (10) bei konstanter Heiztemperatur und unter Vakuumbedingungen, bevor das dielektrische Fluid der Imprägnierungskammer (32) zugeführt wird, und anschließend Aufrechterhalten des Heizens des kapazitiven Elements (10) unter Vakuumbedingungen.

11. Kapazitives Element (10), das gemäß dem Verfahren nach einem der Ansprüche 6 bis 10 hergestellt ist, für selbstheilende Wechselspannungskondensatoren, das umfasst:
wenigstens einen ersten und einen zweiten metallisierten dielektrischen Film (11, 12), wovon wenigstens einer eine segmentierte Metallisierung (22, 23) besitzt, wobei die dielektrischen Filme (11, 12) spiralförmig gewunden sind und axial versetzte Kanten besitzen; und
einen Metallkopf (14) für die elektrische Verbindung mit den Metallschichten an jedem Ende des kapazitiven Elements (10);
wobei jeder Metallkopf (14) und ein geschlossener Raum (30, 31), der zwischen diesem Metallkopf (14) und den versetzten Kanten der dielektrischen Filme (11, 12) vorhanden ist, unter Heiz- und Vakuumbedingungen mit einem dielektrischen Fluid imprägniert werden.

## Revendications

1. Condensateur autorégénérateur pour des tensions alternées, du type comprenant un élément capacitif (10) constitué d'au moins un premier et un deuxième films diélectriques métallisés (11, 12) enroulés en spirales, dans lequel les couches métalliques des spires de chaque film diélectrique (11, 12) sont connectées à une tête métallique (14) en correspondance avec chaque extrémité de l'élément capacitif (10), ***caractérisé en ce que***
la couche métallique d'au moins un film diélectrique (11, 12) est divisée en segments ou portions métalliques (22,23) connectés par de fines bandes (27) de métallisation ;
les spires desdits premier et deuxième films diélectriques (11, 12) en correspondance avec chaque extrémité de l'élément capacitif (10) ont des rebords décalés axialement ; et
***en ce qu'**un* espace fermé (30,31) est prévu entre chaque tête métallique (14) et les rebords décalés des films diélectriques (11, 12) ;
chaque tête métallique (14) et ledit espace fermé (30, 31) étant imprégnés, sous vide, avec un fluide diélectrique ayant une viscosité comprise entre 20 et 200 mPa.s.

2. Condensateur selon la revendication 1, ***caractérisé en ce que*** le fluide diélectrique pour imprégner l'élément capacitif (10) est de nature synthétique.

3. Condensateur selon la revendication 2, ***caractérisé en ce que*** le fluide diélectrique synthétique est choisi parmi les huiles de silicone ou de polyesters de polyol.

4. Condensateur selon la revendication 1, ***caractérisé en ce que*** le fluide diélectrique pour imprégner l'élément capacitif (10) est de nature végétale.

5. Condensateur selon la revendication 4, ***caractérisé en ce que*** le fluide diélectrique est l'huile de colza.

6. Procédé de fabrication d'un élément capacitif (10) de condensateurs autorégénérateurs, dans lequel l'élément capacitif comprend au moins un premier et un deuxième films diélectriques métallisés (11, 12) enroulés en spirales, et des têtes métalliques (14), ***caractérisé par** les étapes consistant à :*
chauffer l'élément capacitif (10), enfermé dans une chambre d'imprégnation (32) sous condition de vide ;
alimenter un fluide diélectrique dans ladite chambre d'imprégnation (32) ;
provoquer l'imprégnation des têtes métalliques (14) et d'un espace clos (30, 31) entre chaque tête métallique (14) et des rebords axialement décalés des spires des films diélectriques (11, 12) avec un fluide diélectrique tout en maintenant des conditions contrôlées de chauffage et de vide dans la chambre (32) pendant l'étape d'imprégnation ;
le fluide diélectrique ayant une viscosité comprise entre 20 et 200 mPa.s.

7. Procédé selon la revendication 6, ***caractérisé en ce que*** le fluide diélectrique est de nature synthétique, choisi parmi les huiles de silicone et de polyesters de polyol.

8. Procédé selon la revendication 6, ***caractérisé en ce que*** le fluide diélectrique est l'huile de colza.

9. Procédé selon la revendication 6, ***caractérisé par*** l'imprégnation sous vide de l'élément capacitif (10) par immersion totale dans le fluide diélectrique.

10. Procédé selon la revendication 6, ***caractérisé par*** la désaération de l'élément capacitif (10) sous une température de chauffage constante et sous des conditions de vide, avant d'alimenter le fluide diélectrique dans la chambre d'imprégnation (32) et de maintenir ensuite le chauffage de l'élément capacitif (10) sous des conditions de vide.

11. Elément capacitif (10) fabriqué selon le procédé revendiqué dans l'une quelconque des revendications 6 à 10, pour des condensateurs autorégénérateurs pour des tensions alternées, comprenant :
au moins un premier et un deuxième films diélectriques métallisés (11, 12) dont au moins l'un possède une métallisation segmentée (22, 23), lesdits films diélectriques (11, 12) étant enroulés en spirales avec des rebords décalés axialement ;
une tête métallique (14) pour la connexion électrique avec les couches métalliques à chaque extrémité de l'élément capacitif (10) :
et chaque tête métallique (14) et un espace fermé (30, 31) existant entre cette tête métallique (14) et les rebords décalés des films diélectriques (11, 12), étant imprégnés avec un fluide diélectrique sous des conditions de chauffage et de vide.
